# EUROPEAN PATENT APPLICATION

(11) **EP 4 826 822 A1**
(43) Date of publication of application: **21.10.2026**
(21) Application number: 24904037.9
(22) Date of filing: 20.11.2024
(51) Int. Cl.: H01M 10/0562, C01B 25/14, H01M 10/052

(54) **SOLID ELECTROLYTE, METHOD OF PREPARATION THEREOF, AND LITHIUM SECONDARY BATTERY COMPRISING SAME**

(30) Priority: 12.12.2023 KR 20230179453
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR)
(74) Representative: Pfenning, Meinig & Partner mbB
(86) International application number: PCT/KR2024/018408
(87) International publication number: WO 2025/127471

(57) **Abstract**

The present invention relates to a solid electrolyte, a method for preparing the same, and a lithium secondary battery comprising the same. Specifically, the present invention relates to a sulfide-based solid electrolyte comprising one or more of Li₂O, Li₂SO₄, and P₂O₅, a method for preparing the same, and a lithium secondary battery comprising the same.

## Description

### [TECHNICAL FIELD]

The present invention relates to a solid electrolyte, a method for preparing the same, and a lithium secondary battery comprising the same. Specifically, the present invention relates to a sulfide-based solid electrolyte comprising one or more of Li₂O, Li₂SO₄, and P₂O₅, a method for preparing the same, and a lithium secondary battery comprising the same.

### [BACKGROUND ART]

Recently, as demand for IT mobile devices and small electric power-driven devices such as electric bicycles and small electric vehicles has rapidly increased, interest in high-capacity batteries has increased. In addition, improvement in safety and increase in energy density of high-capacity batteries have emerged as major issues. Accordingly, as interest in all-solid-state batteries has increased in order to improve the safety of existing secondary batteries and increase energy density, research related to all-solid-state batteries has been actively conducted. An all-solid-state battery refers to a battery in which a liquid electrolyte conventionally used in a lithium secondary battery is replaced with a solid. Since a flammable solvent is not used in the battery, ignition or explosion caused by a reaction such as a decomposition reaction of a conventional electrolyte solution does not occur at all, and thus safety of the battery can be improved. In addition, since lithium metal or a lithium alloy can be used as a negative electrode material, energy density with respect to the mass and volume of the battery can be improved. In the above-described all-solid-state battery, an inorganic solid electrolyte is generally used, and in particular, solid electrolytes having a composition such as Li₆PS₅Cl having an argyrodite structure have been variously studied. However, a sulfide-based solid electrolyte has a problem in that it is difficult to handle in a general atmosphere due to a side reaction with moisture, and improving this has emerged as an important task.

### [DETAILED DESCRIPTION OF THE INVENTION]

### [Technical Problem]

A technical problem to be solved by the present invention is to provide a solid electrolyte having improved moisture stability and initial capacity.

Another technical problem to be solved by the present invention is to provide a method for preparing a solid electrolyte having the above-described advantages.

Another technical problem to be solved by the present invention is to provide a lithium secondary battery comprising a solid electrolyte having the above-described advantages.

### [Technical Solution]

A solid electrolyte according to an embodiment of the present invention may be represented by the following Chemical Formula 1.

[Chemical Formula 1] LiₓPS_{y}O_{z}Cl_{w}

wherein 4<x≤6, 4<y<5, 0<z<0.1, and 0.7<w≤1.

A method for preparing a solid electrolyte according to another embodiment of the present invention may include: preparing a lithium compound, a sulfur compound, and a halogen compound as raw materials; mixing the raw materials; pressure-molding the mixture to form a pellet; and heat-treating the pellet, and may form a solid electrolyte represented by the following Chemical Formula 1.

[Chemical Formula 1] LiₓPS_{y}O_{z}Cl_{w}

wherein 4<x≤6, 4<y<5, 0<z<0.1, and 0.7<w≤1.

A lithium secondary battery according to another embodiment of the present invention comprises: a positive electrode comprising a positive electrode active material; a negative electrode comprising a negative electrode active material; and a solid electrolyte positioned between the positive electrode and the negative electrode, wherein the solid electrolyte comprises one or more of Li₂O, Li₂SO₄, and P₂O₅ and may be represented by the following Chemical Formula 1.

[Chemical Formula 1] LiₓPS_{y}O_{z}Cl_{w}

wherein 4<x≤6, 4<y<5, 0<z<0.1, and 0.7<w≤1.

### [Advantageous Effects]

The solid electrolyte according to an embodiment of the present invention comprises one or more of Li₂O, Li₂SO₄, and P₂O₅, thereby providing a solid electrolyte having improved moisture stability and initial capacity as compared with a conventional sulfide-based solid electrolyte.

The method for preparing a solid electrolyte according to another embodiment of the present invention can provide a method for preparing a solid electrolyte having the above-described advantages.

The lithium secondary battery according to another embodiment of the present invention can provide a lithium secondary battery comprising a solid electrolyte having the above-described advantages.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

Hereinafter, a solid electrolyte according to an embodiment of the present invention will be described.

The solid electrolyte according to an embodiment may be represented by the following Chemical Formula 1.

[Chemical Formula 1] LiₓPS_{y}O_{z}Cl_{w}

wherein 4<x≤6, 4<y<5, 0<z<0.1, and 0.7<w≤1.

With respect to Chemical Formula 1, preferably, 5<x≤6, 4.5<y<5, 0<z<0.1, and 0.8<w≤1 may be satisfied. More preferably, 5.5<x≤6, 4.6<y<5, 0<z<0.1, and 0.9<w≤1 may be satisfied.

The solid electrolyte according to an embodiment may comprise Li₂O.

Li₂O may be included to improve moisture stability of the solid electrolyte.

In the solid electrolyte according to an embodiment, the Li₂O may be included in an amount of greater than 0 mol% and less than 2 mol%, based on 100 mol% of the total amount of the solid electrolyte. Preferably, the Li₂O may be included in an amount of greater than 0 mol% and less than 1 mol%. More preferably, the Li₂O may be included in an amount of greater than 0 mol% and less than 0.6 mol%.

When the content of Li₂O is included in the above-described range, moisture stability and discharge capacity of the solid electrolyte may be improved. In contrast, when the content of Li₂O is not included in the above-described range, moisture stability of the solid electrolyte may be lowered. In addition, as the content of Li₂O, which is an impurity, increases, the degree of occurrence of side reactions may increase, thereby lowering structural stability of the solid electrolyte.

The solid electrolyte according to an embodiment may further comprise one or more of Li₂SO₄ and P₂O₅.

One or more of Li₂SO₄ and P₂O₅ may be further included to improve moisture stability of the solid electrolyte.

In the solid electrolyte according to an embodiment, the Li₂SO₄ may be included in an amount of greater than 0 mol% and less than 3 mol%, based on 100 mol% of the total amount of the solid electrolyte. Preferably, the Li₂SO₄ may be included in an amount of greater than 0 mol% and less than 2 mol%. More preferably, the Li₂SO₄ may be included in an amount of greater than 0 mol% and less than 1 mol%.

When the content of Li₂SO₄ is included in the above-described range, moisture stability and discharge capacity of the solid electrolyte may be improved. In contrast, when the content of Li₂SO₄ is not included in the above-described range, moisture stability of the solid electrolyte may be lowered. In addition, when the content of Li₂SO₄, which is an impurity, increases, the amount of Li₂SO₄ that cannot be included in the solid electrolyte structure increases, and thus the structure of the solid electrolyte may become unstable.

In the solid electrolyte according to an embodiment, the P₂O₅ may be included in an amount of greater than 0 mol% and less than 20 mol%, based on 100 mol% of the total amount of the solid electrolyte. Preferably, the P₂O₅ may be included in an amount of greater than 0 mol% and less than 10 mol%. More preferably, the P₂O₅ may be included in an amount of greater than 0 mol% and less than 5 mol%.

When the content of P₂O₅ is included in the above-described range, moisture stability and discharge capacity of the solid electrolyte may be improved. In contrast, when the content of P₂O₅ is not included in the above-described range, moisture stability of the solid electrolyte may be lowered. In addition, when the content of P₂O₅ increases, the Li concentration relative to the P concentration in the solid electrolyte decreases, and thus discharge capacity may decrease.

The solid electrolyte according to an embodiment may satisfy the following Equation 1. [Equation 1] $0 \leq {\left[{CLi}_{2}O\right]}^{2} \times {\left[{CLi}_{2}{SO}_{4}\right]}^{2} \times \left[{CP}_{2}{O}_{5}\right] < 2.25$ wherein, in Equation 1, [CLi₂O], [CLi₂SO₄], and [CP₂O₅] mean molar percent (mol%) concentrations of Li₂O, Li₂SO₄, and P₂O₅ included in the solid electrolyte, respectively, and at least one of [CLi₂O], [CLi₂SO₄], and [CP₂O₅] is greater than 0.

Preferably, in Equation 1, 0≤[CLi₂O]²×[CLi₂SO₄]²×[CP₂O₅]<1.60 may be satisfied. More preferably, in Equation 1, 0≤[CLi₂O]²×[CLi₂SO_{4]}²×[CP₂O₅]<0.80 may be satisfied. Even more preferably, in Equation 1, 0≤[CLi₂O]²×[CLi₂SO₄]²×[CP₂O₅]≤0.40 may be satisfied.

When the value of [CLi₂O]²×[CLi₂SO₄]²×[CP₂O₅] in Equation 1 is included in the above-described range, moisture stability and discharge capacity of the solid electrolyte may be improved. In contrast, when the value of [CLi₂O]²×[CLi₂SO₄]²×[CP₂O₅] is not included in the above-described range, a problem may occur in that moisture stability and discharge capacity of the solid electrolyte decrease.

Hereinafter, a method for preparing a solid electrolyte according to another embodiment of the present invention will be described.

The method for preparing a solid electrolyte according to another embodiment may include: preparing a lithium compound, a sulfur compound, and a halogen compound as raw materials; mixing the raw materials; pressure-molding the mixture to form a pellet; and heat-treating the pellet, and may form a solid electrolyte represented by the following Chemical Formula 1.

[Chemical Formula 1] LiₓPS_{y}O_{z}Cl_{w}

wherein 4<x≤6, 4<y<5, 0<z<0.1, and 0.7<w≤1.

With respect to Chemical Formula 1, preferably, 5<x≤6, 4.5<y<5, 0<z<0.1, and 0.8<w≤1 may be satisfied. More preferably, 5.5<x≤6, 4.6<y<5, 0<z<0.1, and 0.9<w≤1 may be satisfied.

In the method for preparing a solid electrolyte according to another embodiment, the lithium compound may be Li₂S comprising at least one of Li₂O and Li₂SO₄ as an impurity.

When the lithium compound comprises at least one of Li₂O and Li₂SO₄ as an impurity as described above, moisture stability may be improved as compared with Li₆PS₅Cl, which is a conventional argyrodite-based solid electrolyte prepared without impurities.

The method for preparing a solid electrolyte according to another embodiment may include further mixing at least one of Li₂O, Li₂SO₄, and P₂O₅ in the step of preparing the raw materials.

In addition to Li₂O and Li₂SO₄, which are impurities included in the above-described lithium compound, at least one of Li₂O, Li₂SO₄, and P₂O₅ may be further mixed to improve moisture stability.

In the method for preparing a solid electrolyte according to another embodiment, the additionally mixed Li₂O may be added in an amount of greater than 0 mol% and less than 2 mol%, based on 100 mol% of the total amount of the raw materials. Preferably, the Li₂O may be included in an amount of greater than 0 mol% and less than 1 mol%. More preferably, the Li₂O may be included in an amount of greater than 0 mol% and less than 0.6 mol%.

When the input amount of Li₂O is included in the above-described range, moisture stability and discharge capacity of the solid electrolyte may be improved. In contrast, when the input amount of Li₂O is not included in the above-described range, moisture stability of the solid electrolyte may be lowered. In particular, when the input amount of Li₂O excessively increases, residual Li₂O that cannot be included in the structure causes side reactions, thereby lowering structural stability of the solid electrolyte.

In the method for preparing a solid electrolyte according to another embodiment, the additionally mixed Li₂SO₄ may be added in an amount of greater than 0 mol% and less than 3 mol%, based on 100 mol% of the total amount of the raw materials. Preferably, the Li₂SO₄ may be included in an amount of greater than 0 mol% and less than 2 mol%. More preferably, the Li₂SO₄ may be included in an amount of greater than 0 mol% and less than 1 mol%.

When the input amount of Li₂SO₄ is included in the above-described range, moisture stability and discharge capacity of the solid electrolyte may be improved. In contrast, when the input amount of Li₂SO₄ is not included in the above-described range, moisture stability of the solid electrolyte may be lowered. In addition, when the input amount of Li₂SO₄ increases, the amount of Li₂SO₄ that cannot be included in the solid electrolyte structure increases, and thus the structure of the solid electrolyte may become unstable.

In the method for preparing a solid electrolyte according to another embodiment, the additionally mixed P₂O₅ may be added in an amount of greater than 0 mol% and less than 20 mol%, based on 100 mol% of the total amount of the raw materials. Preferably, the P₂O₅ may be included in an amount of greater than 0 mol% and less than 10 mol%. More preferably, the P₂O₅ may be included in an amount of greater than 0 mol% and less than 5 mol%.

When the input amount of P₂O₅ is included in the above-described range, moisture stability and discharge capacity of the solid electrolyte may be improved. In contrast, when the input amount of P₂O₅ is not included in the above-described range, moisture stability of the solid electrolyte may be lowered. In addition, when the input amount of P₂O₅ increases, the Li concentration relative to the P concentration in the solid electrolyte decreases, and thus discharge capacity may decrease.

Hereinafter, a lithium secondary battery according to another embodiment of the present invention will be described.

The lithium secondary battery according to another embodiment comprises: a positive electrode comprising a positive electrode active material; a negative electrode comprising a negative electrode active material; and a solid electrolyte positioned between the positive electrode and the negative electrode, wherein the solid electrolyte comprises one or more of Li₂O, Li₂SO₄, and P₂O₅ and may be represented by the following Chemical Formula 1.

[Chemical Formula 1] LiₓPS_{y}O_{z}Cl_{w}

wherein 4<x≤6, 4<y<5, 0<z<0.1, and 0.7<w≤1.

With respect to Chemical Formula 1, preferably, 5<x≤6, 4.5<y<5, 0<z<0.1, and 0.8<w≤1 may be satisfied. More preferably, 5.5<x≤6, 4.6<y<5, 0<z<0.1, and 0.9<w≤1 may be satisfied.

In the lithium secondary battery according to another embodiment, the solid electrolyte may satisfy the following Equation 1. [Equation 1] $0 \leq {\left[{CLi}_{2}O\right]}^{2} \times {\left[{CLi}_{2}{SO}_{4}\right]}^{2} \times \left[{CP}_{2}{O}_{5}\right] < 2.25$ wherein, in Equation 1, [CLi₂O], [CLi₂SO₄], and [CP₂O₅] mean molar percent (mol%) concentrations of Li₂O, Li₂SO₄, and P₂O₅ included in the solid electrolyte, respectively, and at least one of [CLi₂O], [CLi₂SO₄], and [CP₂O₅] is greater than 0.

Preferably, in Equation 1, 0≤[CLi₂O]²×[CLi₂SO₄]²×[CP₂O₅]<1.60 may be satisfied. More preferably, in Equation 1, 0≤[CLi₂O]²×[CLi₂SO₄]²×[CP₂O₅]<0.80 may be satisfied. Even more preferably, in Equation 1, 0≤[CLi₂O]²×[CLi₂SO₄]²×[CP₂O₅]≤0.40 may be satisfied.

When the value of [CLi₂O]²×[CLi₂SO₄]²×[CP₂O₅] in Equation 1 is included in the above-described range, moisture stability and discharge capacity of the solid electrolyte may be improved. In contrast, when the value of [CLi₂O]²×[CLi₂SO₄]²×[CP₂O₅] is not included in the above-described range, a problem may occur in that moisture stability and discharge capacity of the solid electrolyte decrease.

### [MODE FOR CARRYING OUT THE INVENTION]

Hereinafter, Examples, Comparative Examples, and Experimental Examples of the present invention will be described. However, the following Examples are merely preferred embodiments of the present invention, and the present invention is not limited to the following Examples. In addition, various modifications may be made and practiced within the scope of the claims, the detailed description of the invention, and the accompanying drawings, and such modifications may also fall within the scope of the present invention.

### <Example 1> Preparation of Li₆PS_{4.99}O_{0.01}Cl (Li₂O: 0.5 mol%; Li₂SO₄: 0 mol%; P₂O₅: 0 mol% Included)

Raw materials were mixed at the corresponding stoichiometric ratio such that Li₂O was included in an amount of 0.5 mol% based on 100 mol% of the total solid electrolyte, and then the mixture was mixed using a planetary mill at a speed of 300 rpm for about 8 hours. Thereafter, a pressure of 300 MPa was applied to form a pellet, and the pellet was heat-treated at a temperature of 550°C under an Ar atmosphere to prepare Li₆PS_{4.99}O_{0.01}Cl.

### <Example 2> Preparation of Li_{5.88}PS_{4.89}O_{0.01}Cl_{0.98} (Li₂O: 0.5 mol%; Li₂SO₄: 0 mol%; P₂O₅: 1 mol% Included)

A solid electrolyte having a composition of Li_{5.88}PS_{4.89}O_{0.01}Cl_{0.98} was prepared in the same manner as in Example 1, except that Li₂O was included in an amount of 0.5 mol% and P₂O₅ was included in an amount of 1 mol%.

### <Example 3> Preparation of Li_{5.88}PS_{4.89}O_{0.09}Cl_{0.98} (Li₂O: 0.5 mol%; Li₂SO₄: 0.8 mol%; P₂O₅: 1 mol% Included)

A solid electrolyte having a composition of Li_{5.88}PS_{4.89}O_{0.09}Cl_{0.98} was prepared in the same manner as in Example 1, except that Li₂O was included in an amount of 0.5 mol%, Li₂SO₄ was included in an amount of 0.8 mol%, and P₂O₅ was included in an amount of 1 mol%.

### <Example 4> Preparation of Li_{5.71}PS_{4.74}O_{0.09}Cl_{0.95} (Li₂O: 0.5 mol%; Li₂SO₄: 0.8 mol%; P₂O₅: 2.5 mol% Included)

A solid electrolyte having a composition of Li_{5.71}PS_{4.74}O_{0.09}Cl_{0.95} was prepared in the same manner as in Example 1, except that Li₂O was included in an amount of 0.5 mol%, Li₂SO₄ was included in an amount of 0.8 mol%, and P₂O₅ was included in an amount of 2.5 mol%.

### <Example 5> Preparation of Li_{5.43}PS_{4.51}O_{0.08}Cl_{0.9} (Li₂O: 0.5 mol%; Li₂SO₄: 0.8 mol%; P₂O₅: 5 mol% Included)

A solid electrolyte having a composition of Li_{5.43}PS_{4.51}O_{0.08}Cl_{0.9} was prepared in the same manner as in Example 1, except that Li₂O was included in an amount of 0.5 mol%, Li₂SO₄ was included in an amount of 0.8 mol%, and P₂O₅ was included in an amount of 5 mol%.

### <Example 6> Preparation of Li_{4.91}PS_{4.08}O_{0.08}Cl_{0.82} (Li₂O: 0.5 mol%; Li₂SO₄: 0.8 mol%; P₂O₅: 10 mol% Included)

A solid electrolyte having a composition of Li_{4.91}PS_{4.08}O_{0.08}Cl_{0.82} was prepared in the same manner as in Example 1, except that Li₂O was included in an amount of 0.5 mol%, Li₂SO₄ was included in an amount of 0.8 mol%, and P₂O₅ was included in an amount of 10 mol%.

### <Comparative Example 1> Preparation of Li₄PS_{3.33}O_{0.06}Cl_{0.67} (Li₂O: 0.5 mol%; Li₂SO₄: 0.8 mol%; P₂O₅: 20 mol% Included)

A solid electrolyte having a composition of Li₄PS_{3.33}O_{0.06}Cl_{0.67} was prepared in the same manner as in Example 1, except that Li₂O was included in an amount of 0.5 mol%, Li₂SO₄ was included in an amount of 0.8 mol%, and P₂O₅ was included in an amount of 20 mol%.

### <Comparative Example 2> Preparation of Li_{5.88}PS_{4.89}O_{0.31}Cl_{0.98} (Li₂O: 0.5 mol%; Li₂SO₄: 3 mol%; P₂O₅: 1 mol% Included)

A solid electrolyte having a composition of Li_{5.88}PS_{4.89}O_{0.31}Cl_{0.98} was prepared in the same manner as in Example 1, except that Li₂O was included in an amount of 0.5 mol%, Li₂SO₄ was included in an amount of 3 mol%, and P₂O₅ was included in an amount of 1 mol%.

### <Comparative Example 3> Preparation of Li_{5.71}PS_{4.74}O_{0.3}Cl_{0.95} (Li₂O: 0.5 mol%; Li₂SO₄: 3 mol%; P₂O₅: 2.5 mol% Included)

A solid electrolyte having a composition of Li_{5.71}PS_{4.74}O_{0.3}Cl_{0.95} was prepared in the same manner as in Example 1, except that Li₂O was included in an amount of 0.5 mol%, Li₂SO₄ was included in an amount of 3 mol%, and P₂O₅ was included in an amount of 2.5 mol%.

### <Comparative Example 4> Preparation of Li_{5.43}PS_{4.51}O_{0.28}Cl_{0.9} (Li₂O: 0.5 mol%; Li₂SO₄: 3 mol%; P₂O₅: 5 mol% Included)

A solid electrolyte having a composition of Li_{5.43}PS_{4.51}O_{0.28}Cl_{0.9} was prepared in the same manner as in Example 1, except that Li₂O was included in an amount of 0.5 mol%, Li₂SO₄ was included in an amount of 3 mol%, and P₂O₅ was included in an amount of 5 mol%.

### <Comparative Example 5> Preparation of Li_{4.91}PS_{4.08}O_{0.26}Cl_{0.82} (Li₂O: 0.5 mol%; Li₂SO₄: 3 mol%; P₂O₅: 10 mol% Included)

A solid electrolyte having a composition of Li_{4.91}PS_{4.08}O_{0.26}Cl_{0.82} was prepared in the same manner as in Example 1, except that Li₂O was included in an amount of 0.5 mol%, Li₂SO₄ was included in an amount of 3 mol%, and P₂O₅ was included in an amount of 10 mol%.

### <Comparative Example 6> Preparation of Li_{5.71}PS_{4.74}O_{0.96}Cl_{0.95} (Li₂O: 0.5 mol%; Li₂SO₄: 10 mol%; P₂O₅: 2.5 mol% Included)

A solid electrolyte having a composition of Li_{5.71}PS_{4.74}O_{0.96}Cl_{0.95} was prepared in the same manner as in Example 1, except that Li₂O was included in an amount of 0.5 mol%, Li₂SO₄ was included in an amount of 10 mol%, and P₂O₅ was included in an amount of 2.5 mol%.

### <Comparative Example 7> Preparation of Li_{4.91}PS_{4.08}O_{0.83}Cl_{0.82} (Li₂O: 0.5 mol%; Li₂SO₄: 10 mol%; P₂O₅: 10 mol% Included)

A solid electrolyte having a composition of Li_{4.91}PS_{4.08}O_{0.83}Cl_{0.82} was prepared in the same manner as in Example 1, except that Li₂O was included in an amount of 0.5 mol%, Li₂SO₄ was included in an amount of 10 mol%, and P₂O₅ was included in an amount of 10 mol%.

### <Comparative Example 8> Preparation of Li_{5.29}PS_{4.26}O_{0.13}Cl_{1.57} (Li₂O: 2 mol%; Li₂SO₄: 0.8 mol%; P₂O₅: 1 mol% Included)

A solid electrolyte having a composition of Li_{5.20}PS_{4.26}O_{0.13}Cl_{1.57} was prepared in the same manner as in Example 1, except that Li₂O was included in an amount of 2 mol%, Li₂SO₄ was included in an amount of 0.8 mol%, and P₂O₅ was included in an amount of 1 mol%.

### <Comparative Example 9> Preparation of Li_{5.14}PS_{4.14}O_{0.12}Cl_{1.52} (Li₂O: 2 mol%; Li2SO₄: 0.8 mol%; P₂O₅: 2.5 mol% Included)

A solid electrolyte having a composition of Li_{5.14}PS_{4.14}O_{0.12}Cl_{1.52} was prepared in the same manner as in Example 1, except that Li₂O was included in an amount of 2 mol%, Li₂SO₄ was included in an amount of 0.8 mol%, and P₂O₅ was included in an amount of 2.5 mol%.

### <Comparative Example 10> Preparation of Li_{4.89}PS_{3.94}O_{0.12}Cl_{1.45} (Li₂O: 2 mol%; Li₂SO₄: 0.8 mol%; P₂O₅: 5 mol% Included)

A solid electrolyte having a composition of Li_{4.89}PS_{3.94}O_{0.12}Cl_{1.45} was prepared in the same manner as in Example 1, except that Li₂O was included in an amount of 2 mol%, Li₂SO₄ was included in an amount of 0.8 mol%, and P₂O₅ was included in an amount of 5 mol%.

### <Comparative Example 11> Preparation of Li_{4.42}PS_{3.56}O_{0.11}Cl_{1.31} (Li₂O: 2 mol%; Li₂SO₄: 0.8 mol%; P₂O₅: 10 mol% Included)

A solid electrolyte having a composition of Li_{4.42}PS_{3.56}O_{0.11}Cl_{1.31} was prepared in the same manner as in Example 1, except that Li₂O was included in an amount of 2 mol%, Li₂SO₄ was included in an amount of 0.8 mol%, and P₂O₅ was further included in an amount of 10 mol%.

### <Experimental Example 1> Evaluation of 0.1C Ionic Conductivity at 30°C

Electrochemical evaluation was performed on the solid electrolytes of Comparative Examples 1 and 2 and Examples 1 to 3 using a powder-pressed cell. The electrolyte was introduced and densified at 300 MPa. Thereafter, the cell was fastened using SUS electrodes at a pressure of 70 MPa, and impedance was measured by applying 10 mV at 25°C.

### <Experimental Example 2> Evaluation of Moisture Stability

0.5 g of the solid electrolyte was applied onto a watch glass, exposed for 8 hours in a dry room having a dew point of -45°C, and then ionic conductivities before and after exposure were comparatively evaluated.

### <Experimental Example 3> Evaluation of Electrochemical Characteristics

After a pellet of the solid electrolyte was prepared, a positive electrode was bonded to the upper portion and a counter electrode In was bonded to the lower portion, followed by densification at 500 MPa. After an all-solid-state battery cell was fastened, a formation cycle was performed at 0.1C in a 30°C chamber, and lifespan characteristics were evaluated at 0.5C.

According to Table 1 below, it can be confirmed that the solid electrolytes according to Examples of the present invention have superior moisture stability and discharge capacity as compared with Comparative Examples 1 to 11. In particular, it can be confirmed that the solid electrolytes of Examples 1 to 4 also have superior ionic conductivity as compared with Comparative Examples 1 to 11.

**[Table 1]**

| **Classification** | **Li₂O Content (mol %)** | **Li₂SO₄ Content (mol%)** | **P₂O₅ Content (mol%)** | **Sulfide-Based Solid Electrolyte (LSPCl) Composition** | **Ionic Conductivity (mS/c m)** | **Discharge Capacity (mAh/g)** | **Moisture Stability (%)** | [C_{Li2O}]²*[C_{LiSO4}]² *[C_{P2O5}] |
|---|---|---|---|---|---|---|---|---|
| **Example 1** | 0.5 | 0 | 0 | Li₆PS_{4.99}O_{0.01}Cl | 2.52 | 203 | 73 | 0 |
| **Example 2** | 0.5 | 0 | 1 | Li_{5.88}PS_{4.89}O_{0.01}Cl_{0.98} | 2.45 | 204 | 76 | 0 |
| **Example 3** | 0.5 | 0.8 | 1 | Li_{5.88}PS_{4.89}O_{0.09}Cl_{0.98} | 2.31 | 205 | 77 | 0.16 |
| **Example 4** | 0.5 | 0.8 | 2.5 | Li_{5.71}PS_{4.74}O_{0.09}Cl_{0.95} | 2.2 | 206 | 81 | 0.4 |
| **Example 5** | 0.5 | 0.8 | 5 | Li_{5.43}PS_{4.51}O_{0.08}Cl_{0.9} | 2.06 | 201 | 79 | 0.8 |
| **Example 6** | 0.5 | 0.8 | 10 | Li_{4.91}PS_{4.08}O_{0.08}Cl_{0.82} | 1.86 | 196 | 83 | 1.6 |
| **Comparative Example 1** | 0.5 | 0.8 | 20 | Li₄PS_{3.33}O_{0.06}Cl_{0.67} | 1.66 | 195 | 61 | 3.2 |
| **Comparative Example 2** | 0.5 | 3 | 1 | Li_{5.88}PS_{4.89}O_{0.31}Cl_{0.98} | 2.18 | 201 | 73 | 2.25 |
| **Comparative Example 3** | 0.5 | 3 | 2.5 | Li_{5.71}PS_{4.74}O_{0.3}Cl_{0.95} | 2.01 | 193 | 71 | 5.625 |
| **Comparative Example 4** | 0.5 | 3 | 5 | Li_{5.43}PS_{4.51}O_{0.28}Cl_{0.9} | 1.88 | 196 | 70 | 11.25 |
| **Comparative Example 5** | 0.5 | 3 | 10 | Li_{4.91}PS_{4.08}O_{0.26}Cl_{0.82} | 1.04 | 191 | 63 | 22.5 |
| **Comparative Example 6** | 0.5 | 10 | 2.5 | Li_{5.71}PS_{4.74}O_{0.96}Cl_{0.95} | 1.87 | 198 | 66 | 62.5 |
| **Comparative Example 7** | 0.5 | 10 | 10 | Li_{4.91}PS_{4.08}O_{0.83}Cl_{0.82} | 1.71 | 193 | 56 | 250 |
| **Comparative Example 8** | 2 | 0.8 | 1 | Li_{5.29}PS_{4.26}O_{0.13}Cl_{1.57} | 1.93 | 198 | 63 | 2.56 |
| **Comparative Example 9** | 2 | 0.8 | 2.5 | Li_{5.14}PS_{4.14}O_{0.12}Cl_{1.52} | 1.51 | 199 | 74 | 6.4 |
| **Comparative Example 10** | 2 | 0.8 | 5 | Li_{4.89}PS_{3.94}O_{0.12}Cl_{1.45} | 1.13 | 195 | 68 | 12.8 |
| **Comparative Example 11** | 2 | 0.8 | 10 | Li_{4.42}PS_{3.56}O_{0.11}Cl_{1.31} | 0.86 | 188 | 59 | 25.6 |

## Claims

1. A solid electrolyte represented by the following Chemical Formula 1:
[Chemical Formula 1] LiₓPS_{y}O_{z}Cl_{w}
wherein 4<x≤6, 4<y<5, 0<z<0.1, and 0.7<w≤1.

2. The solid electrolyte of claim 1,
wherein the solid electrolyte comprises Li₂O.

3. The solid electrolyte of claim 2,
wherein the Li₂O is included in an amount of greater than 0 mol% and less than 2 mol%, based on 100 mol% of a total amount of the solid electrolyte.

4. The solid electrolyte of claim 2,
wherein the solid electrolyte further comprises one or more of Li₂SO₄ and P₂O₅.

5. The solid electrolyte of claim 4,
wherein the Li₂SO₄ is included in an amount of greater than 0 mol% and less than 3 mol%, based on 100 mol% of a total amount of the solid electrolyte.

6. The solid electrolyte of claim 4,
wherein the P₂O₅ is included in an amount of greater than 0 mol% and less than 20 mol%, based on 100 mol% of a total amount of the solid electrolyte.

7. The solid electrolyte of claim 1,
wherein the solid electrolyte satisfies the following Equation 1: [Equation 1] $0 \leq {\left[{CLi}_{2}O\right]}^{2} \times {\left[{CLi}_{2}{SO}_{4}\right]}^{2} \times \left[{CP}_{2}{O}_{5}\right] < 2.25$
wherein, in Equation 1, [CLi₂O], [CLi₂SO₄], and [CP₂O₅] mean molar percent (mol%) concentrations of Li₂O, Li₂SO₄, and P₂O₅ included in the solid electrolyte, respectively, and at least one of [CLi₂O], [CLi₂SO₄], and [CP₂O₅] is greater than 0.

8. A method for preparing a solid electrolyte, comprising:
preparing a lithium compound, a sulfur compound, and a halogen compound as raw materials;
mixing the raw materials;
pressure-molding the mixture to form a pellet; and
heat-treating the pellet,
wherein a solid electrolyte represented by the following Chemical Formula 1 is formed:
[Chemical Formula 1] LiₓPS_{y}O_{z}Cl_{w}
wherein 4<x≤6, 4<y<5, 0<z<0.1, and 0.7<w≤1.

9. The method for preparing a solid electrolyte of claim 8,
wherein the lithium compound is Li₂S comprising at least one of Li₂O and Li₂SO₄ as an impurity.

10. The method for preparing a solid electrolyte of claim 8,
wherein the preparing of the raw materials comprises further mixing at least one of Li₂O, Li₂SO₄, and P₂O₅.

11. The method for preparing a solid electrolyte of claim 10,
wherein the additionally mixed Li₂O is added in an amount of greater than 0 mol% and less than 2 mol%, based on 100 mol% of a total amount of the raw materials.

12. The method for preparing a solid electrolyte of claim 10,
wherein the additionally mixed Li₂SO₄ is added in an amount of greater than 0 mol% and less than 3 mol%, based on 100 mol% of a total amount of the raw materials.

13. The method for preparing a solid electrolyte of claim 10,
wherein the additionally mixed P₂O₅ is added in an amount of greater than 0 mol% and less than 20 mol%, based on 100 mol% of a total amount of the raw materials.

14. A lithium secondary battery, comprising:
a positive electrode comprising a positive electrode active material;
a negative electrode comprising a negative electrode active material; and
a solid electrolyte positioned between the positive electrode and the negative electrode,
wherein the solid electrolyte comprises one or more of Li₂O, Li₂SO₄, and P₂O₅ and is represented by the following Chemical Formula 1:
[Chemical Formula 1] LiₓPS_{y}O_{z}Cl_{w}
wherein 4<x≤6, 4<y<5, 0<z<0.1, and 0.7<w≤1.

15. The lithium secondary battery of claim 14,
wherein the solid electrolyte satisfies the following Equation 1: [Equation 1] $0 \leq {\left[{CLi}_{2}O\right]}^{2} \times {\left[{CLi}_{2}{SO}_{4}\right]}^{2} \times \left[{CP}_{2}{O}_{5}\right] < 2.25$
wherein, in Equation 1, [CLi₂O], [CLi₂SO₄], and [CP₂O₅] mean molar percent (mol%) concentrations of Li₂O, Li₂SO₄, and P₂O₅ included in the solid electrolyte, respectively, and at least one of [CLi₂O], [CLi₂SO₄], and [CP₂O₅] is greater than 0.
